# EUROPÄISCHE PATENTSCHRIFT

(11) **EP 0 736 049 B1**
(45) Veröffentlichungstag und Bekanntmachung des Hinweises auf die Patenterteilung: **28.01.1998**
(21) Anmeldenummer: 95900767.5
(22) Anmeldetag: 22.11.1994
(51) Int. Cl.: C08F 220/04, C11D 3/37, C08F 251/00

(54) **COPOLYMERISATE UNGESÄTTIGTER CARBONSÄUREN, VERFAHREN ZUR HERSTELLUNG UND IHRE VERWENDUNG**
COPOLYMERS OF UNSATURATED CARBOXYLIC ACIDS, PROCESS FOR PRODUCING THEM AND THEIR USE
COPOLYMERES D'ACIDES CARBOXYLIQUES INSATURES, LEUR PROCEDE DE FABRICATION ET LEUR UTILISATION

(30) Priorität: 23.12.1993 DE 4344029
(43) Veröffentlichungstag der Anmeldung: 09.10.1996
(73) Patentinhaber: Th. Goldschmidt AG, 45127 Essen (DE)
(72) Erfinder: BACHUS, Herbert, D-72379 Hechingen (DE)
(74) Vertreter: Jönsson, Hans-Peter, Dr.Dipl.-Chem.
(86) Internationale Anmeldenummer: EP9403846
(87) Internationale Veröffentlichungsnummer: WO9517442

(56) Entgegenhaltungen:
- EP-A- 0 289 895
- EP-A- 0 364 681
- WO-A-94/01476

## Beschreibung

Gegenstand der Erfindung sind Copolymerisate ungesättigter Carbonsäuren mit anderen ungesättigten Verbindungen, deren Abmischungen mit anderen Copolymerisaten ungesättigter Carbonsäuren mit anderen ungesättigten Verbindungen sowie die Verwendung der Copolymerisate als Hilfsmittel in der Textilveredlung sowie in Wasch- und Reinigungsmitteln.

Komplexbildner und Dispergiermittel werden in Mengen von vielen tausend Tonnen im Bereich der Textilindustrie sowie der Waschmittel- und Reinigungsindustrie benötigt und gelangen nach ihrem Einsatz ins Abwasser.

Dem heutigen Stand der Technik entsprechend verwendet man hierzu häufig Aminopolycarbonsäuren wie die Aminocarbonsäuren, Phosphonsäuren und Polyacrylsäuren.
Der Einsatz dieser Verbindungen ist jedoch mit erheblichen ökologischen Nachteilen verbunden:
- Die zur Zeit eingesetzten Aminocarbonsäuren sind aus Abwässern schwer zu eleminieren und bis auf die, in vielen Prozessen nur ungenügend wirksame NTA biologisch kaum abzubauen.
- Die zur Zeit häufig eingesetzten Polyacrylsäuren sind zwar durch Adsorption an Klärschlämme eleminierbar, sie werden jedoch nicht biologisch abgebaut.
- Phosphonsäuren sind im Labortest nur langsam biologisch abbaubar, jedoch werden sie durch Hydrolyse und Photolyse in umweltrelevanten Konzentrationen rasch abgebaut ("Environmental Properties and Safety Assessment of Organic Phosphonates Use of Detergent and Water Treatment Applications" von W.E. Gledhill und T.C.J. Feijtel in "The Handbook of Environmental Chemistry", Volume 3 Part F, Springer-Verlag 1992, Seite 261 - 285). Darüber hinaus sind diese Phosphonate durch Adsorption an Klärschlamm bioeliminierbar und besitzen, im Gegensatz zu den klassischen Komplexbildnern EDTA oder DTPA, kein Remobilisierungsvermögen für toxische Schwermetalle wie Cadmium und Quecksilber. Dennoch ist auch diese Verbindungsklasse schon wegen des Phosphorgehaltes häufig unerwünscht oder deren Anwendung durch gesetzliche Normen erschwert.

Es ist daher von Interesse, zur Umweltentlastung komplexbildende und dispergierende Verbindungen ohne die Nachteile klassischer Komplexbildner zu synthetisieren und in der Praxis einzusetzen. Aufgabe ist es, nachwachsende Rohstoffe wie Mono- oder Polysaccharide als Ausgangsstoffe für Synthesen hinreichend biologisch abbaubaren Dispergiermittel, insbesondere auf der Basis von organischen Carbonsäuren, heranzuziehen.

In DE-24 22 823 B2 wird der Einsatz von Polyacrylsäuren zum Färben von Cellulosefasern beschrieben. In DE-29 26 098 A1 sind Polyacrylsäuren für Nachbbehandlungsmittel für Färbungen mit Reaktivfarbstoffen beschrieben, um damit die Auswaschbarkeit von nicht fixiertem Farbstoffhydrolysat zu verbessern. In US-4 916 178 A werden Polyacrylsäuren, in US-4 963 157 A die Kombination von Polyacrylsäuren mit Phosphonsäuren für den Einsatz in der Wasserstoffperoxidbleiche beschrieben. Offenbart werden in den Offenlegungs- und Patentschriften Polyacrylsäuren (bei US-4 943 157 A in Kombination mit Phosphonsäuren), die keine biologische Abbaubarkeit aufweisen.

In der DE-42 03 797 A1 sind Wasserstoffperoxidstabilisatoren für die Wasserstoffperoxidbleiche von Textilien beschrieben, die aus Magnesium-Ionen, Gluconsäure und Nitrilotriessigsäure bestehen und weiterhin Citronensäure enthalten können. Dabei wird auf die biologisch schwer abbaubare Ethylendiamintetraessigsäure sowie auf phosphorhaltige Produkte verzichtet, die gegebenenfalls in Kombination mit Gluconsäure, als Wasserstoffperoxidstabilisator nach DE-22 11 578 B2 mit und ohne Wasserglas eingesetzt werden können. In DE-42 08 106 A1 sind für die Vorbehandlung von Textilfasermaterial Mischungen von Citronensäure, Zuckercarbonsäuren wie Gluconsäure und gegebenenfalls einer geringen Menge an Mineralsäure beschrieben. Ebenfalls zur Stabilisierung von Wasserstoffperoxid werden in DE-41 13 003 A1 und EP 0 510 331 A2 Eiweiß, Eiweißhydrolysate und carboxymethylierte Eiweißhydrolysate beschrieben. DE-42 03 797 A1, 42 08 106 A1, 41 13 003 A1 und EP 0 510 331 A2 weisen zwar biologisch abbaubare Mischungen auf, jedoch fehlen diesen Formulierungen die dispergierenden Eigenschaften, die von Polyacrylaten bekannt sind.

Aus der EP 0 289 895 A2 ist die Herstellung von Copolymerisaten der Acrylsäure mit Glucose bekannt, die sich durch gute Calciumbindekapazitäten und eine gute biologische Abbaubarkeit auszeichnen. In der EP 0 364 681 werden entsprechende Verbindungen auf der Basis von Disacchariden, nämlich Leukrose und Palatinose beschrieben.

Es wurde nunmehr überraschenderweise gefunden, daß sich die aus den EP 0 289 895 A2 und EP 0 364 681 bekannten Copolymerisate und bisher unbekannte, speziell ausgewählte, Copolymerisate als Dispergiermittel bzw. Sequestriermittel für viele Prozesse in der Textilveredlung eignen.

Insbesondere wurde gefunden, daß durch die Verwendung neuartiger Monomerbausteine, wie z. B. Dicarbonsäuren wie Maleinsäure, und/oder sulfonsäurehaltige Monomere wie z. B. 2-Acrylamido-2-methyl-1-propansulfonsäure, sich die Produkteigenschaften gegenüber dem Stand der Technik weiter optimieren lassen.

Die Erfindung umfaßt in einer ersten Ausführungsform Copolymerisate (A) ungesättigter Carbonsäuren mit anderen ungesättigten Verbindungen, erhältlich durch Umsetzung von Lösungen zur Enolatbildung befähigter Mono- und/oder Disaccharide mit ungesättigten Carbonsäuren, in Gegenwart radikalbildender Initiatoren, dadurch gekennzeichnet, daß die ungesättigten Carbonsäuren ausgewählt sind aus Sulfonsäuregruppen-enthaltenden Carbonsäuren Comonomergemischen von Sulfonsäuregruppen enthaltenden Carbonsäuren mit Dicarbonsäuren und Comonomergemischen von Sulfonsäuregruppen-enthaltenden Carbonsäuren und/oder Dicarbonsäuren sowie deren Anhydride mit monoethylenischungesättigen Monocarbonsäuren mit 3 bis 10 C-Atomen.

Erfindungsgemäß wurde gefunden, daß die spezielle Auswahl der ungesättigten Carbonsäuren aus Sulfonsäuregruppen-enthaltenden Carbonsäuren und Comonomergemischen von Sulfonsäuregruppen-enthaltenden Carbonsäuren und/oder Dicarbonsäuren sowie deren Anhydride mit den genannten monoethylenisch-ungesättigten Monocarbonsäuren gegenüber dem Stand der Technik verbesserte Produkteigenschaften aufweisen. Hierbei ist besonders der Flottentest mit Küpenfarbstoff zu erwähnen, wo Ansätze mit Maleinsäure und gegebenenfalls zusätzlich noch 2-Acrylamido-2-methyl-1-propansulfonsäure den Farbstoff homogen in Lösung halten können und nur wenig Filterrückstand ergeben, wohingegen Copolymerisate ohne Maleinsäure dazu nicht in der Lage sind. Ebenfalls ist gemäß der Erfindung die verbesserte Dispergierwirkung von Calciumcarbonat ersichtlich. Dieses Ergebnis ist umso überraschender, da Ansätze mit Maleinsäure keine höheren Calciumbindkapazitäten ergeben.

Diese erfindungsgemäßen Copolymerisate (A) enthalten zur Enolatbildung befähigte Mono- und/oder Disaccharide. Wässrige Lösungen dieser Verbindungen sind unter den erfindungsgemäßen Bedingungen relativ stabil und verfärben sich so lange nicht oder nur wenig, wie noch die Polymerisation bzw. Copolymerisation mit den ungesättigten Carbonsäuren stattfindet. Erst wenn die ungesättigten Carbonsäuren durch Polymerisation aus der Lösung verschwunden sind, beginnt die übliche Zersetzung und Verfärbung der Saccharidlösungen, die bereits bei pH-Werten größer als 4 auftreten kann.

Bevorzugterweise enthalten die Copolymerisate gemäß der vorliegenden Erfindung zur Enolatbildung befähtigte Mono- und/oder Disaccharide, die ausgewählt sind aus Glucose, Fructose, Mannose, Maltose, Xylose, Galactose, Palatinose und Leukrose.

Die Copolymerisate (A) können prinzipiell in fünf verschiedene Gruppen eingeteilt werden. Allen gemeinsam ist die Anwesenheit der zur Enolatbildung befähigten Mono- und/oder Disaccharide.

Eine erste Gruppe der Copolymerisate (A) ist dadurch gekennzeichnet, daß die Copolymerisate ungesättigte Carbonsäuren enthalten, die allein ausgewählt sind aus Sulfonsäuregruppen-enthaltenden Carbonsäuren. Der Einsatz derartiger ungesättigter Carbonsäuren ist bisher im Stand der Technik auf dem hier vorliegenden Gebiet nicht bekannt.

Eine zweite Gruppe der Copolymerisate (A) umfaßt ComonomerenGemische der genannten Sulfonsäuregruppen-enthaltenden Carbonsäuren mit Dicarbonsäuren sowie deren Anhydride der Dicarbonsäuren.

Die dritte Gruppe der Copolymerisate (A) umfaßt binäre Comonomergemische aus Sulfonsäuregruppen-enthaltenden Carbonsäuren mit monoethylenisch-ungesättigten Monocarbonsäuren mit 3 bis 10 C-Atomen.

Die vierte der vorgenannten Gruppen der Copolymerisate (A) umfaßt darüber hinaus ternäre Comonomergemische aus Sulfonsäuregruppen-enthaltenden Carbonsäuren, Dicarbonsäuren sowie deren Anhydride mit darüber hinaus monoethylenisch-ungesättigten Monocarbonsäuren mit 3 bis 10 C-Atomen.

Eine fünfte Gruppe der Copolymerisate (A) umfaßt darüber hinaus Comonomerengemische aus Dicarbonsäuren sowie deren Anhydride mit monoethylenisch-ungesättigten Monocarbonsäuren mit 3 bis 10 C-Atomen.

Erfindungsgemäß wurde gefunden, daß besonders gute Ergebnisse erhalten werden, wenn es sich bei der Sulfonsäuregruppen-enthaltenden Carbonsäure um 2-Acrylamido-2-methyl-1-propansulfonsäure handelt. Besondere Vorteile zeigen sich beim Einsatz der vorgenannten Sulfonsäuren beim Calciumbindevermögen und im Küpentest gegenüber dem Stand der Technik.

Die an sich bereits im Stand der Technik als (alleiniger Monomerbaustein) bekannten Dicarbonsäuren sind in bevorzugter Weise ausgewählt aus Maleinsäure, Fumarsäure und/oder Itaconsäure sowie deren Anhydride, sofern sie existent sind.

Aus dem Stand der Technik ist bekannt, daß monoethylenisch-ungesättigte Monocarbonsäuren mit 3 bis 10 C-Atomen in Copolymerisaten mit zur Enolatbildung befähigten Mono- und/oder Disacchariden Wasch- und Reinigungsmitteln besondere Eigenschaften als Sequestrierungsmittel, Komplexbildner und Cobuilder verleihen. Demgemäß sind auch gemäß der vorliegenden Erfindung die monoethylenisch-ungesättigten Monocarbonsäuren vorzugsweise ausgewählt aus Acrylsäure und/oder Methacrylsäure.

Innerhalb der obengenannten Gruppen von Copolymerisaten (A) wird das Stoffmengenverhältnis der Comonomerengemische von Sulfonsäuregruppen-enthaltenden Carbonsäuren zu Dicarbonsäuren der zweiten Gruppe im Bereich von 95:5 bis 5:95 Mol-% eingestellt. In gleicher Weise kann das Stoffmengenverhältnis der dritten Gruppe der Copolymerisate (1), d.h. das Stoffmengenverhältnis der Sulfonsäuregruppen-enthaltenden Carbonsäuren zu den monoethylenisch-ungesättigten Monocarbonsäuren mit 3 bis 10 C-Atomen im Bereich von 95:5 bis 5:95 Mol-% eingestellt werden. Bei den ternären Comonomergemischen der vierten Gruppe der Copolymerisate (A) ist es ebenfalls bevorzugt, das Stoffmengenverhältnis der Sulfonsäuregruppen-enthaltenden Carbonsäuren zu Dicarbonsäuren und monoethylenisch-ungesättigten Monocarbonsäuren mit 3 bis 10 C-Atomen im Bereich von 95:2,5:2,5 bis 2,5:95:2,5 oder bis 2,5:2,5:95 Mol-% einzustellen. Im Falle der binären Gemische aus Dicarbonsäuren sowie deren Anhydride mit monoethylenisch-ungesättigten Monocarbonsäuren mit 3 bis 10 C-Atomen der fünften Gruppe der Copolymerisate (A) wird das Stoffmengenverhältnis vorzugsweise im Bereich von 95:5 bis 5:95 Mol-% eingestellt.

Das allgemeine Verfahren zur Herstellung von Copolymerisaten (A) ist grundsätzlich aus dem Stand der Technik und insbesondere aus der EP-0 289 895 A2 und EP-0 364 681 A2 bekannt. So können auch die erfindungsgemäßen Copolymerisate (A) dadurch erhalten werden, daß zu der Lösung des zur Enolatbildung befähigten Monosaccharids und/oder Disaccharids die Sulfonsäuregruppen-enthaltenden Carbonsäuren, die Dicarbonsäuren sowie deren Anhydride sowie die monoethylenisch-ungesättigten Monocarbonsäuren unabhängig von einander je nach gewünschtem Reaktionsprodukt und der radikalbildende Initiator zugegeben werden, um dann die Reaktionsmischung langsam zu erhitzen. In der Regel springt oberhalb von 60°C die Reaktion an und wird dann oftmals so heftig, daß die Temperatur über 110°C hinausgeht. Dies sollte nach Möglichkeit vermieden werden, da es hierbei zu einer unerwünschten stärkeren Zersetzung des noch nicht in das Copolymerisat (A) eingebauten Zuckers kommen kann. Die Temperaturführung im Bereich von 80 bis 100°C ist besonders bevorzugt. Besonders bevorzugt wird die Reaktion im Verlauf von 0,5 h bis 10 h, insbesondere bevorzugt im Verlauf von 2 h bis 4 h vorgenommen. Als radikalbildende Initiatoren werden vorzugsweise organische und/oder anorganische Peroxide sowie Wasserstoffperoxid eingesetzt.

Erfindungsgemäß ist es besonders bevorzugt, den pH-Wert der Reaktion auf einen Bereich von 5 bis 10, insbesondere 7 bis 10, d.h. einen schwachsauren oder alkalischen pH-Wertbereich einzustellen.

Die erfindungsgemäßen Copolymerisate können in an sich bekannter, einfacher Weise aus dem Reaktionsgemisch entfernt werden, nämlich durch einfaches Ansäuern, wodurch sie dann ausgefällt werden oder sich als separate Phase abscheiden.

Die angesäuerten Mutterlaugen enthalten in erster Linie nicht umgesetzte Mengen an Monosacchariden und/oder Disacchariden. Diese können gegebenenfalls wiedergewonnen und erneut eingesetzt werden.
Darüber hinaus wurde auch gefunden, daß physikalische Abmischungen von Copolymerisaten (A), wie oben beschrieben, mit an sich bekannten Copolymerisaten (B), wie sie beispielsweise in der EP-0 289 895 A2 und der EP-0 364 681 A2 bekannt sind, außerordentlich gute Ergebnisse hervorbringen. Dementsprechend besteht eine weitere Ausführungsform der vorliegenden Erfindung in Abmischungen von Copolymerisaten (A) ungesättigter Carbonsäuren mit anderen ungesättigten Verbindungen, erhältlich durch Umsetzung von Lösungen zu Enolatbildung-befähigter Mono- und/oder Disaccharide mit ungesättigten Carbonsäuren in Gegenwart von radikalbildenden Initiatoren, wobei die ungesättigten Carbonsäuren ausgewählt sind aus Sulfonsäuregruppen-enthaltenen Carbonsäuren, Comonomergemischen von Sulfonsäuregruppen-enthaltenden Carbonsäuren mit Dicarbonsäuren und Comonomergemischen von Sulfonsäuregruppen-enthaltenden Carbonsäuren und/oder Dicarbonsäuren sowie deren Anhydride mit ethylenisch-ungesättigten Monocarbonsäuren mit 3 bis 10 C-Atomen mit Copolymerisaten (B) ungesättigter Carbonsäuren mit anderen ungesättigten Verbindungen, erhältlich durch Umsetzung von Lösungen zur Enolatbildung-befähigter Monosaccharide mit ungesättigten Carbonsäuren, insbesondere mit 3 bis 10 C-Atomen, in Gegenwart von radikalbildenden Initiatoren.

Das Gewichtsverhältnis der Copolymerisate (A) zu den Copolymerisaten (B) wurde insbesondere im Bereich von 99:1 bis 1:99 Gew.-Teilen, bevorzugt im Bereich von 20:80 bis 50:50 Gew.-Teilen eingestellt.

Darüber hinaus lassen sich die erfindungsgemäßen Produktklassen durch Mischen mit weiteren biologisch gut abbaubaren Komplexbildnern wie z. B. Gluconsäure, NTA, Citronensäure und Weinsäure zu phosphorfreien und biologisch gut abbaubaren Komplexbildnern formulieren. Ebenfalls geeignet sind Abmischungen mit Eiweiß wie Casein, Eiweißhydrolysaten oder auch Polyphosphaten, die die dispergierende Wirkung und schmutztragenden Eigenschaften von Polyacrylaten verbessern können und auch als Schwermetallkomplexbildner die Stabilisierwirkung in alkalischen Wasserstoffperoxidbleichbädern erhöhen können.

Dementsprechend besteht eine weitere Ausführungform der vorliegenden Erfindung in Abmischungen enthaltend die Copolymerisate (A) und/oder die Copolymerisate (B) in Gegenwart von anorganischen und/oder organischen, insbesondere biologisch abbaubaren Substanzen, insbesondere Komplexbildnern, Eiweiß und Eiweißhydrolysaten, Magnesiumsalzen und/oder Stabilisatoren für Perverbindungen.

Die Substanzen, die gemäß der vorliegenden Erfindung eingesetzt werden, sind vorzugsweise ausgewählt aus feinkristallinen, synthetischen oder natürlichen, gebundenes Wasser-enthaltenden Zeolithen, Alkalimetall- und/oder Ammoniumsalzen von Mono- und Polycarbonsäuren, insbesondere Gluconsäure, Nitrilotriessigsäure, Citronensäure und Weinsäure sowie Alkalimetall- und/oder Ammoniumpyrophosphaten, -tripolyphosphaten und höher kondensierten -polyphosphaten mit einem Gesamtphosphorgehalt der Endformulierung von weniger oder gleich 3 Gew.-%. Besonders bevorzugt ist ein Gewichtsverhältnis von Copolymerisat zu den genannten Substanzen von 50:1 bis 1:1 Gew.-Teilen, bezogen auf die Abmischungen. Als bevorzugte Alkalimetallkationen kommen Natrium- und/oder Kaliumionen zum Einsatz.

Es wurde weiterhin gefunden, daß geringe Anteile von anderen Komplexbildnern, insbesondere Phosphonsäuren die Eigenschaften der erfindungsgemäßen Copolymerisate in der textilen Anwendung nochmals deutlich verbessern. Als Phosphonsäuren kommen beispielsweise Amino-tris-methylenphosphonsäure (ATMP) und deren N-Oxid (ATMP-O), Ethylendiamin-tetrakis-methylenphosphonsäure (EDTMP) und deren N-Oxide (EDTMP-O), Diethylentriamin-pentakismethylenphosphonsäure (DTPMP) und deren N-Oxide (DTPMP-O), Triethylen-tetramin-hexakis-methylenphosphonsäure (TTHMP) und deren N-Oxide (TTHMP-O), 2-Phosphonobutan-1,2,4-tricarbonsäure (PBTC), 1-Hydroxyethan-1,1-diphosphonsäure (HEDP) und N-(2-Carboxyethyl)-1-amino-ethan-1,1-diphosphonsäure (CADP) in Frage. Abgesehen von der deutlich gesteigerten Wirksamkeit bei gleichzeitig um ca. 50 % reduziertem Wirkstoffgehalt, sind diese Abmischungen auch wegen der somit halbierten chemischen Sauerstoff-Belastung (CSB-Fracht) interessant. Die Ausführungsbeispiele zeigen eindrucksvoll Bestwerte in der Küpenfärbung und im Dispergieren von Calciumcarbonat. Vorzugsweise enthalten die erfindungsgemäßen Abmischungen Gewichtsverhältnisse von Copolymerisat zu Phosphonsäuren im Bereich von 30:1 bis 3:1 Gew.-Teilen.

In einer weiteren bevorzugten Ausführungsform der vorliegenden Erfindung enthalten die vorgenannten Copolymerisate oder Abmischungen Magnesiumsalze, die insbesondere ausgewählt sind aus Magnesiumoxid, Magnesiumhydroxid, Magnesiumsulfat und/oder Magnesiumchlorid, vorzugsweise einem Gewichtsverhältnis von Copolymerisat zu Magnesiumsalz im Bereich von 30:1 bis 5:1 Gew.-Teilen.

Für den Fall, daß die vorgenannten Copolymerisate und/oder die Abmischungen Eiweiß oder Eiweißhydrolysate enthalten, sind diese vorzugsweise ausgewählt aus Casein und Kollagen, insbesondere in einem Gewichtsverhältnis von Copolymerisat zu Eiweißhydrolysat im Bereich von 100:1 bis 5:1, insbesondere 30:1 bis 1:1 Gew.-Teilen.

Eine weitere Ausführungsform der vorliegenden Erfindung betrifft die Verwendung der Copolymerisate (A), die die Abmischungen der Copolymerisate (A) mit den Copolymerisaten (B) sowie die Copolymerisate (B) allein. Erfindungsgemäß wurde überraschenderweise gefunden, daß sich die vorgenannten Copolymerisate, gegebenenfalls in Abmischung mit den vorgenannten weiteren Bestandteilen, als Hilfsmittel in der Textilveredlung eignen. Darüber hinaus sind die Copolymerisate (A) und die Abmischungen als Copolymerisaten (A) und Copolymerisaten (B) auch in besonderer Weise geeignet als Sequestrierungsmittel, Komplexbildner und Cobuilder in Wasch- und Reinigungsmitteln.

In einer weiteren bevorzugten Ausführungsform der vorliegenden Erfindung werden die vorgenannten Copolymerisate sowie deren Abmischungen eingesetzt beim alkalischen Abkochen von Baumwolle, bei sauren Entmineralisierungsprozessen, insbesondere mit anschließender einbadiger Wasserstoffperoxidbleiche nach pH-Wert-Wechsel, bei der Peressigsäurebleiche, bei der Entschlichtung von Geweben, bei der wasserglashaltigen oder wasserglasfreien Wasserstoffperoxidbleiche, bei Färbeverfahren, insbesondere mit Reaktivfarbstoffen oder Indanthrenfarbstoffen, dem Nachwaschen von Färbungen und Druck sowie Waschprozessen in der Vorbehandlung und Färberei.

Besonders bevorzugt im Sinne der vorliegenden Erfindung ist die Verwendung der vorgenannten Copolymerisate sowie deren Abmischungen in der
wasserglashaltigen Kontinueheißbleiche zwischen 0,1 und 15 g/l, insbesondere zwischen 2 und 10 g/l,
wasserglasfreien Kontinueheißbleiche zwischen 0,1 und 15 g/l, insbesondere zwischen 2 und 10 g/l,
wasserglashaltigen Diskontinueheißbleiche zwischen 0,1 und 5 g/l, insbesondere zwischen 0,2 und 3 g/l,
wasserglasfreien Diskontinueheißbleiche zwischen 0,1 und 5 g/l, insbesondere zwischen 0,2 und 5 g/l,
wassserglashaltigen Kaltbleiche zwischen 0,1 und 15 g/l, insbesondere zwischen 2 und 10 g/l,
wasserglasfreien Kaltbleiche zwischen 0,1 und 15 g/l, insbesondere zwischen 2 und 10 g/l,
Kontinueentschlichtung zwischen 0,1 und 15 g/l, insbesondere zwischen 2 und 10 g/l,
Diskontinueentschlichtung zwischen 0,1 und 5 g/l, insbesondere zwischen 0,2 und 5 g/l,
reduktiven Bleiche zwischen 0,1 und 15 g/l, insbesondere zwischen 0,2 und 5 g/l,
beim alkalischen Abkochen zwischen 0,1 und 15 g/l, insbesondere zwischen 0,2 und 5 g/l,
beim Färbeverfahren zwischen 0,1 und 10 g/l, insbesondere zwischen 0,3 und 4 g/l,
beim Nachseifen von Färbungen zwischen 0,1 und 5 g/l, insbesondere zwischen 0,5 und 2 g/l und in
Waschprozessen 0,1 und 15 g/l, insbesondere zwischen 0,2 und 5 g/l, jeweils bezogen auf die Produktformulierungen, die bevorzugt einen Trockensubstanzgehalt von 15 bis 60 Gew.-% aufweisen.

### Beispiele

### Beispiel 1 (Herstellung eines Copolymerisats analog EP-0 289 895 A2)

Lösung 1: 108,1 g Acrylsäure wurden in 300 g 20 %iger Natronlauge gelöst.
Lösung 2: 90,1 g Glucose wurden in 100 g Wasser gelöst und anschließend 48,6 g Wasserstoffperoxid 35 % zugefügt.

In einem Reaktionsgefäß wurden 100 g Wasser vorgelegt und auf 85 °C erwärmt. Die beiden Lösungen ließ man innerhalb von 90 Minuten zutropfen. Der pH-Wert wurde während der Zutropfphase mittels Dosierung von 50 %iger Natronlauge konstant auf 9 gehalten. Nach Ende der Zugabe wurde der Ansatz noch 30 Minuten bei 98 bis 102 °C gehalten. Der Ansatz wurde danach abgekühlt.

### Beispiel 2

Analog Beispiel 1 wurde ein Copolymerisat hergestellt, wobei der Lösung 1 zusätzlich 5,5 g Mercaptoethanol zugegeben wurde.

### Beispiel 3

Analog Beispiel 1 wurde ein Copolymerisat hergestellt, wobei der Reaktionsansatz anstelle der Lösung 1, 100,9 g Acrylsäure und 20,7 g 2-Acrylamido-2-methyl-1-propansulfonsäure gelöst in 300 g 20 %iger Natronlauge enthielt.

### Beispiel 4:

Analog Beispiel 1 wurde ein Copolymerisat hergestellt, wobei der Reaktionsansatz
Lösung 1: 108,1 g Acrylsäure; Zutropfdauer 120 Minuten
Lösung 2: 48,6 g Wasserstoffperoxid; Zutropfdauer 120 Minuten und
Lösung 3: 50 %ige Natronlauge enthielt.

90,1 g Glucose wurden in 200 g Wasser gelöst und auf 85°C erwärmt. Dann wurden Lösung 1, 2 und 3 so zudosiert, daß der pH-Wert konstant auf 8,7 gehalten wurde. Nach Zugabeende wurde noch 30 Minuten bei 85°C gerührt.

### Beispiel 5

Analog Beispiel 1 wurde ein Copolymerisat hergestellt, wobei der Reaktionsansatz
Lösung 1: 82,9 g Acrylsäure; Zutropfdauer 90 Minuten
Lösung 2: 48,6 g Wasserstoffperoxid; Zutropfdauer 120 Minuten und
Lösung 3: 50 %ige Natronlauge enthielt.

29,4 g Maleinsäureanhydrid wurden zu einer Mischung aus 70 g Wasser und 48 g NaOH 50% zugegeben. Nachdem eine homogene Lösung entstand, wurden 90,1 g Glucose zugegeben und auf 85°C erwärmt. Jetzt wurden Lösung 1, 2 und 3 so zudosiert, daß der pH-Wert konstant auf 9 gehalten wurde. Nach Zugabeende wurde noch 30 Minuten bei 85°C gerührt.

### Beispiel 6

Analog Beispiel 5 wurde ein Copolymerisat hergestellt, wobei der Reaktionsansatz
Lösung 1: 10,4 g AMPS gelöst in 30 g Wasser und 82,9 g Acrylsäure; Zutropfdauer 90 Minuten
Lösung 2: 48,6 g Wasserstoffperoxid; Zutropfdauer 120 Minuten und
Lösung 3: 50 %ige Natronlauge enthielt.

### Beispiel 7

Analog Beispiel 5 wurde ein Copolymerisat hergestellt, wobei der Reaktionsansatz
Lösung 1: 64,9 g Acrylsäure; Zutropfdauer 90 Minuten
Lösung 2: 48,6 g Wasserstoffperoxid; Zutropfdauer 120 Minuten und
Lösung 3: 50 %ige Natronlauge enthielt.

58,8 g Maleinsäureanhydrid wurden zu einer Mischung aus 90 g Wasser und 96 g NaOH 50 % zugegeben. Nachdem eine homogene Lösung entstand, wurden 90,1 g Glucose zugegeben und auf 85°C erwärmt. Jetzt wurden Lösung 1, 2 und 3 so zudosiert, daß der pH-Wert konstant auf 9 gehalten wurde. Nach Zugabeende wurde noch 30 Minuten bei 85°C gerührt.

### Beispiel 8

Analog Beispiel 7 wurde ein Copolymerisat hergestellt, wobei der Reaktionsansatz
Lösung 1: 64,9 g Acrylsäure; Zutropfdauer 210 Minuten
Lösung 2: 48,6 g Wasserstoffperoxid; Zutropfdauer 240 Minuten und
Lösung 3: 50 %ige Natronlauge enthielt.

58,8 g Maleinsäureanhydrid wurden zu einer Mischung aus 90 g Wasser und 96 g NaOH 50 % zugegeben. Nachdem eine homogene Lösung entstand, wurden 90,1 g Glucose zugegeben und auf 85°C erwärmt. Jetzt wurden Lösung 1, 2 und 3 so zudosiert, daß der pH-Wert konstant auf 6,0 gehalten wurde. Nach Zugabeende wurde noch 30 Minuten bei 85°C gerührt.

Sofern es bei hochkonzentrierten Reaktionsansätzen zu Konzentrationsniederschlägen kam, wurde eine stabile Lösung durch Verdünnen mit Wasser auf 70 % der ursprünglichen Konzentration vorgenommen.

### Beispiele 9 bis 20

Bei folgenden Abmischungen wurde Wasser vorgelegt, die Einsatzstoffe entsprechend der Nummerierung der Beispiele in der Reihenfolge von oben nach unten zugegeben und mit Salzsäure 31 % oder Natronlauge 50 % ein pH-Wert von 9 eingestellt. Ausnahmen bilden die Beispiele 11, 19 und 20. Während in Beispiel 11 der pH-Wert belassen wurde, wurde der pH-Wert in den Beispielen 19 und 20 auf einen Wert von 5 eingestellt.

Die nachfolgende Tabelle 1 gibt die Menge der jeweiligen Komponenten an. Die Formulierungen der Beispiele 4, 5 und 6 wurden ohne weitere Aufarbeitung wie aus Reaktion erhalten eingesetzt. Die übrigen Produkte wurden, wenn nicht mit Prozentangabe oder Kristallwasser angegeben, mit 10 % Trockensubstanzgehalt eingesetzt. Die Ansatzgröße betrug jeweils 100 g.

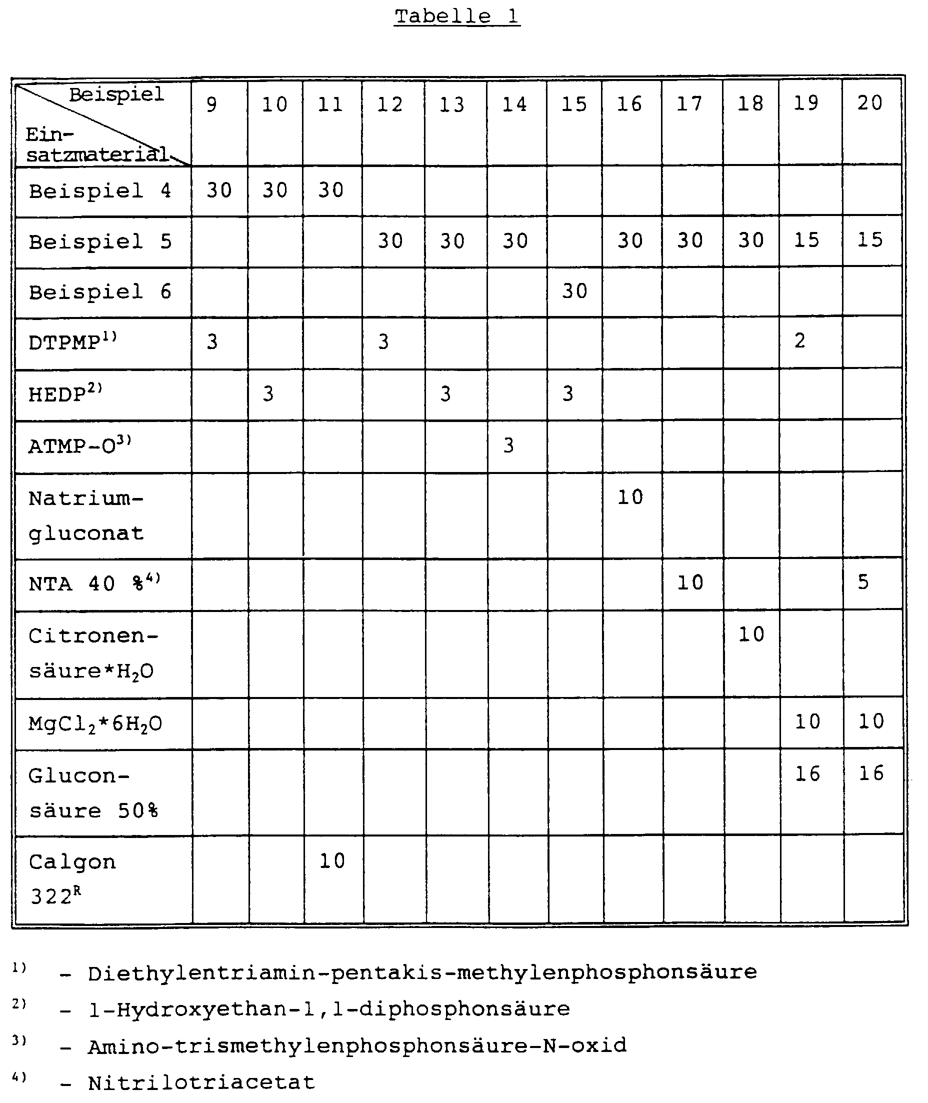

### Calciumbindevermögen-Trübungstitration

1,0 g der Einsatzstoffe gemäß den Ausführungsbeispielen wurden in 100 ml destilliertem Wasser gelöst, mit 1 mol wäßrige NaOH-Lösung der pH-Wert auf 7 bis 9 eingestellt umd mit 10 ml einer 2 %igen Na₂CO₃-Lösung versetzt. Es wurde ein pH-Wert von 11 mit NaOH eingestellt und mit 0,25 molare Calciumchlorid-Lösung titriert, wobei der pH-Wert konstant gehalten wurde. Diese Trübungstitration wurde von einem Lichtleiterphotometer bei 67 % der ursprünglichen Transmission abgebrochen und mit diesem Endpunkt das Calciumbindevermögen bestimmt. Die erhaltenen Daten sind der nachfolgenden Tabelle zu entnehmen.

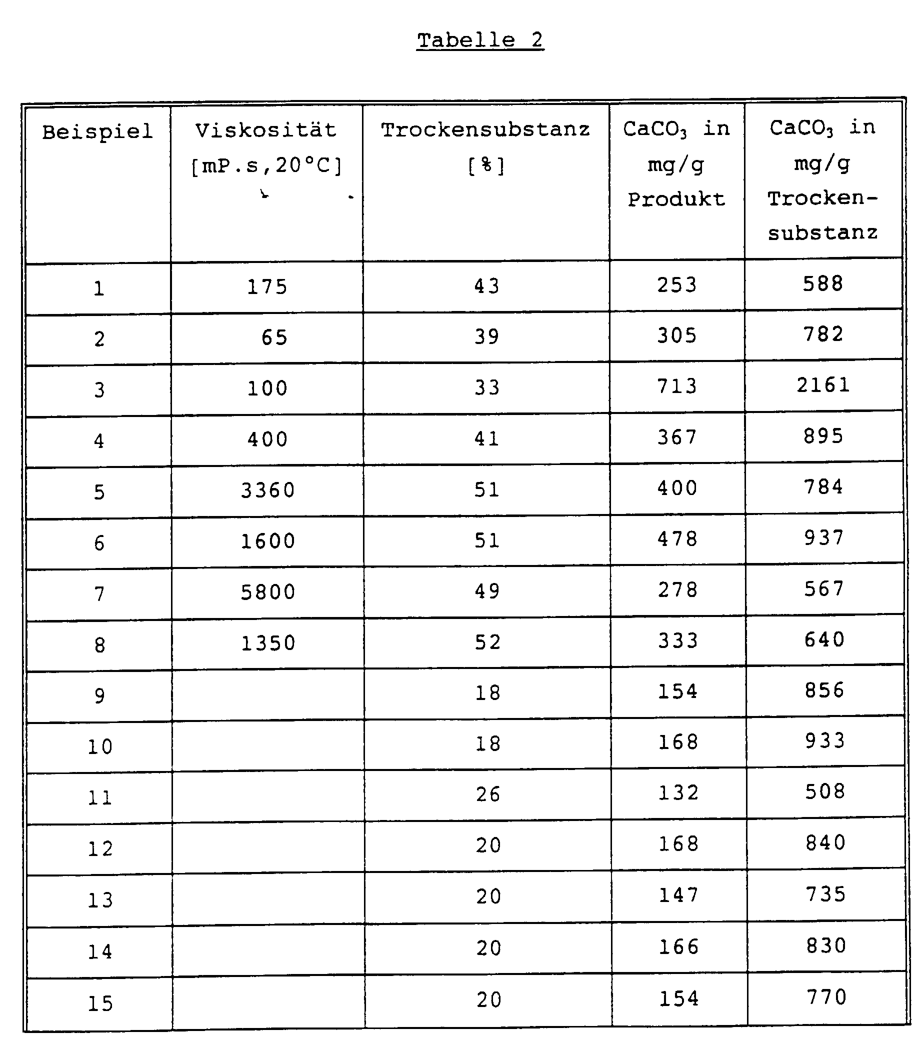

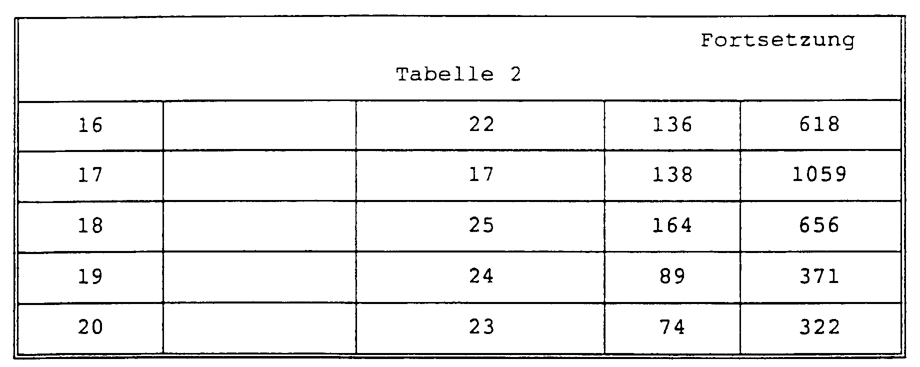

### Calciumdispergiervermögen - Filtertest

150 ml destilliertes Wasser wurden vorgelegt und nacheinander 0,4 g der Einsatzstoffe gemäß den Ausführungsbeispielen, 20°dH Ca (als Calciumchlorid, bezogen auf ein Endvolumen von 200 ml), 10°dH Mg (als Magnesiumsulfat, Härte bezogen auf ein Endvolumen von 200 ml), 4 g NaCl, 4 g Na₂SO, und 4 g Na₂CO₃ zugegeben, 10 Minuten bei Raumtemperatur gerührt und danach mit destilliertem Wasser auf 200 ml Gesamtvolumen aufgefüllt. Diese Mischung wurde 60 min unter Rückfluß erhitzt und danach heiß über ein schwarzes Filter abgelassen. Das Filter wurde nach Trocknen visuell mit einem Bewertungsmaßstab von 1 (rückstandslos) bis 6 (Rückstand wie Blindwert) beurteilt. Die Ergebnisse sind in Tabelle 3 zusammengefaßt.

### Küpentest:

Mit Hilfe eines auf Baumwollbegleitsubstanzen, u.a. Härte, empfindlichen Farbstoffes Indanthrenblau BC^{R} konnte die wirksame Maskierung von Erdalkalimetallen besonders eindrucksvoll dargestellt werden. Dazu wurde Rohbaumwolle essigsauer abgekocht. In dieser Flotte wurde der Farbstoff gelöst. Hier fiel bei unzureichender Dispergierung der als Calciumsalz unlösliche Farbstoff aus. Als Ergebnis wurde bei besonders wirksamen Einsatzstoffen gemäß den Ausführungsbeispielen eine farbige, homogene oder, bei ungenügenden Produkten, eine instabile zweiphasige Flotte erhalten.
Die Beurteilung der Küpenhomogenität wurde nach folgendem Maßstab durchgeführt:
a) homogene Flotte: +;
b) Flotte farbig, Farbstoff jedoch teilweise ausgefallen: ±;
c) Farbstoff ausgefallen, überstehende Flotte farblos oder nahezu farblos: -.
Als weiteres Ergebnis wurde die Flotte über ein weißes Filter abgesaugt, wobei in Gegenwart guter Dispergiermittel der gelöste Farbstoff nahezu rückstandsfrei durch das Filter läuft. Das Filter wurde nach dem Trocknen visuell mit einem Bewertungsmaßstab von 1 (rückstandslos) bis 6 (Rückstand wie Blindwert) beurteilt. Die Ergebnisse sind in der Tabelle 3 zusammengefaßt.

### Prüfung von Seifmitteln zur Entfernung von Reaktivfarbstoffhydrolysat

1. Herstellung der Farbstoffhydrolysatlösung und anschließende Färbung
2,5 g/l Reaktivfarbstoff wurden durch vierstündiges Kochen mit 10 g/l Soda hydrolysiert. Anschließend wurde das Hydrolysat auf Baumwoll-Geveline, Flächengewicht 110 g/m³, mit 80 % Flottenaufnahme geklotzt und 4 Minuten bei 120°C getrocknet.
Als Farbstoff wurden verwendet:
Färbung 1 : 2,0 g/l C.I. Reactive Red 120 und 0,5 g/l C.I.
Reactive Yellow 84 oder
Färbung 2: 2,5 g/l C.I. Reactive Blue 71
2. Waschprüfung
Durch Calciumchloridzugabe wurde bei destilliertem Wasser eine Härte von 5° dH und mit 0,1 molare Natronlauge bzw. 0,1 molare Salzsäure ein pH-Wert von 7 eingestellt. Danach wurden bei einem Flottenverhältnis 1:30 die mit Farbstoffhydrolysat gefärbte Geveline und ein ungefärbtes Begleitmaterial gleicher Qualität 15 Minuten ohne Zwischenspülen in Gegenwart von 2 g/l Hilfsmittel in einem Linitest bei 98°C gewaschen. Visuell beurteilt wurde nach folgendem Maßstab:
Anfärbung der Waschflotte: je dunkler, desto besser Ausbluten der gefärbten Geveline: je heller, desto besser (Blindwert 6, farblos 1)
Anbluten des Begleitmaterials: je heller, desto besser Die Ergebnisse sind in Tabelle 3 zusammengefaßt.

**Tabelle 3**

| | Test | Küpe homogen | Küpen-Filter | CaCO₃ Standard | Nachseifen Färbung 1 | Nachseifen Färbung 2 |
|---|---|---|---|---|---|---|
| | Blindwert | - | 6 | 6 | 6 | 6 |
| Beisp. | 1 | - | 5 | 4 | 3 | 4 |
| | 2 | - | 5 | 4 | 3 | 4 |
| | 3 | - | 5 | 3 | 3 | 4 |
| | 4 | - | 5 | 4 | 3 | 4 |
| | 5 | - | 5 | 4 | 5 | 4 |
| | 6 | + | 3 | 3 | 3 | 4 |
| | 7 | + | 3 | 3 | 3 | 4 |
| | 8 | + | 2 | 2 | 3 | 4 |
| | 9 | ± | 2 | 3 | 4 | 4 |
| | 10 | + | 2 | 2 | 4 | 5 |
| | 11 | - | 5 | 4 | 3 | 3 |
| | 12 | ± | 2 | 2 | 4 | 4 |
| | 13 | + | 1 | 4 | 3 | 3 |
| | 14 | + | 1 | 3 | 3 | 3 |
| | 15 | + | 1 | 2 | 4 | 3 |

Wenn im Folgenden ein Weißgrad angegeben ist, so wurde mittels Datacolor-Weißmetrik die Berechnung in Berger-Einheiten vorgenommen.

### Beispiel A: Pad-Steam-Bleiche mit Wasserglas

Auf ein Rohbaumwollgewebe wurde folgende Flotte foulardiert: 0,2 g/l Bittersalz, 5 ml/l eines anionaktiven Waschmittels (Lavotan^{R}DSU), 5 g/l eines niederaffinen optischen Aufhellers (Tuboblanc^{R}BE fl.), 8 g/l NaOH 100 %, 10 ml/l Wasserglas 38°Bé, 30 ml/l Wasserstoffperoxid 35 % und 5 g/l des Copolymerisats gemäß Beispiel 1, Flottenaufnahme 100 %.
Die Ware wurde nach dem Pad-Steam-Verfahren 30 Minuten bei 102°C behandelt, gewaschen, gespült und getrocknet. Es resultierte ein einwandfrei gebleichtes und aufgehelltes Gewebe. Das Grundweiß stieg von 22 auf 85 Einheiten und die Fluoreszent betrug 72.

### Beispiel B: Pad-Steam-Bleiche ohne Wasserglas und ohne optischen Aufheller

Rohbaumwolle wurde mit 5 ml/l des in Beispiel A genannten Waschmittels, 16 g/l Natronlauge 50 %, 30 ml/l Wasserstoffperoxid 35 % und 10 g/l des Copolymerisats gemäß Beispiel 20 behandelt, Flottenaufnahme 100 %. Die so gebleichte Ware konnte für ein nachfolgendes Färbeverfahren problemlos eingesetzt werden.

### Beispiel C: Kaltbleiche

Ein Rohbauwollgewebe wurde mit folgender Flotte imprägniert: 0,2 g/l Bittersalz, 5 ml/l des in Beispiel A genannten Waschmittels, 30 g/l Natronlauge 50 %, 10 ml/l Wasserglas 38° Bé, 40 ml/l Wasserstoffperoxid 35 % und 5 g/l des Copolymerisats gemäß Beispiel 17, Flottenaufnahme 100 %.
Anschließend wurde die Ware nach dem KKV-Verfahren 24 Stunden bei Raumtemperatur belassen, dann gewaschen, gespült und getrocknet.

### Beispiel D: Diskontinuierliche Bleiche

Rohbaumwolltrikot wurde 30 Minuten bei 98°C und einem Flottenverhältnis von 1 : 10 in folgender Flotte behandelt: 4 g/l Natronlauge 50 %, 8 ml/l Wasserstoffperoxid 35 %, 0,5 g/l eines anionaktiven, schaumarmen Waschmittels (Lavotan^{R}RWS) und 2 g/l der Copolymerisatabmischung gemäß Beispiel 13. Danach wurde ausgewaschen und der Weißgrad gemessen. Er stieg von 25 auf 81 Einheiten.

### Beispiel E: Entschlichtung

Ein Rohbaumwollgewebe, mit Stärke geschlichtet, wurde mit folgender Flotte bei 40°C imprägniert: 5 g/l einer Amylase (Beisol^{R}LZV), 5 ml/l des in Beispiel A genannten Waschmittels und 5 g/l der Copolymerisatabmischung 12. Nach vier Stunden wurde ausgewaschen. Der Entschlichtungsgrad nach TEGEWA betrug 9.

### Beispiel F: Reduktive Bleiche

Ein vorgebleichtes Baumwollgewebe wurde bei einem Flottenverhältnis 1:15 in einer Flotte 45 Minuten bei 60°C behandelt, die sich wie folgt zusammensetzt: 1 g/l des Copolymerisates gemäß Beispiel 4, 2 ml/l des in Beispiel A genannten Waschmittels und 5 g/l eines handelsüblichen Bleichmittels auf Hydrosulfit-Basis. Der Weißgrad stieg von 78 auf 84 Einheiten.

### Beispiel G: Alkalisches Abkochen

Rohbaumwollgewebe wurde bei einem Flottenverhältnis von 1:10 in Gegenwart von 3 g/l der Copolymerisatabmischung gemäß Beispiel 9 und 20 g/l NaOH 100 % 30 min bei 98°C abgekocht. Der Weißgrad der Ware stieg dabei von 22 auf 37 und der Aschegehalt sank auf 27 % des ursprünglichen Wertes. Ohne Hilfsmittel wurde lediglich ein Weißgrad von 31 und eine Restasche von 34 % erhalten.

### Beispiel H: Färben mit Direktfarbstoffen im Ausziehverfahren

Vorgebleichtes Baumwolltrikot wurde auf einem Jet bei einem Flottenverhältnis 1:10 in folgender Flotte behandelt: 1 g/l eines Netzmittels (Subitol^{R}RNC), 1 g/l des Copolymerisats gemäß Beispiel 13, 0,3 g/l eines Faltenverhinderers (Biavin^{R}109) und 1 g/l eines Egalisiermittels (Sarabid^{R}SBF). Nach 10 Minuten wurde der Direktfarbstoff 1 % C.I. Direct Green 26 zugegeben und anschließend auf 98°C erhitzt. Nach 30 Minuten wurde 10 g/l Glaubersalz in kleinen Portionen zugesetzt und nach weiteren 30 Minuten gespült. Die so gefärbte Ware war fertig zur kationischen Nachbehandlung.

### Beispiel I: Färben mit Küpenfarbstoffen auf der Haspelkufe

Vorgebleichtes Baumwolltrikot wurde nach dem Ausziehverfahren bei einem Flottenverhältnis 1:15 mit folgender Flotte behandelt: 3 g/l des Copolymerisats gemäß Beispiel 12, 0,3 g/l des in Beispiel H genannten Faltenverhinderers, 1 g/l eines Farbstoffdispergiermittels (CHT-Dispergator SMS), 1 % Küpenfarbstoff C.I. Vat Green 1 und 15 ml/l Natronlauge 38°Bé. Nach 10 Minuten wurde auf 60°C erwärmt und 6 g/l Hydrosulfit zugegeben. Nach weiteren 35 Minuten wurden nochmals 2 g/l Natronlauge 38°Bé und 2 g/l Hydrosulfit zugegeben und 10 Minuten später im Überlauf gespült. Bei 25°C wird nochmals 1 g/l Farbstoffdispergiermittel und 2 g/l eines Oxidationsmittels (Meropan^{R}XRG) zugesetzt. Anschließend wurde auf 60°C erwärmt und 20 Minuten bei 60°C oxidiert, gespült, erneut 2 g/l des Copolymerisats gemäß Beispiel 12 zugefügt und damit noch 20 Minuten bei 98°C geseift. Nach Ablassen und Spülen war die Ware fertig zum Avivieren.
Besonders vorteilhaft war hier die Verwendung von dem Copolymerisat gemäß Beispiel 12, da die komplexierenden und dispergierenden Eigenschaften es erübrigten, verschiedene phosphonat- und polyacrylathaltige Produkte für die Färbung bzw. zum Nachseifen einzusetzen.

### Beispiel K: Färben mit Reaktivfarbstoffen

Vorgebleichtes Baumwolltrikot wurde nach dem Ausziehverfahren bei einem Flottenverhältnis 1:10 auf einem Jet mit folgender Flotte behandelt: 1 g/l des Copolymerisats gemäß Beispiel 7, 0,3 g/l des in Beispiel H genannten Faltenverhinderers, 1 g/l eines Netzmittels (Subitol^{R}RNC) und 3 % C.I. Reactive Red 141. Es wurde 10 Minuten lang gefärbt, um eine gleichmäßige Farbstoffverteilung zu gewährleisten, dann 70 g/l Natriumchlorid in drei Portionen (10%, 30% und 60%) zugegeben, während die Temperatur auf 80°C erhöht wurde. Nach 20 Minuten bei dieser Temperatur wurde über einen Zeitraum von 10 Minuten 20 g/l Soda zugegeben und 60 Minuten weiter bei dieser Temperatur gefärbt. Nach warmem und kaltem Spülen wurde einmal kochend mit 2 g/l des Copolymerisats gemäß Beispiel 7 geseift. Die so gefärbte Ware besitzt bereits eine gute Waschechtheit, die durch eine kationische Nachbehandlung nochmals verbessert werden kann.

## Patentansprüche

1. Copolymerisate (A) ungesättigter Carbonsäuren mit anderen ungesättigten Verbindungen, erhältlich durch Umsetzung von Lösungen zur Enolatbildung befähigter Mono- und/oder Disaccharide mit ungesättigten Carbonsäuren in Gegenwart radikalbildender Initiatoren, dadurch gekennzeichnet, daß die ungesättigten Carbonsäuren ausgewählt sind aus Sulfonsäuregruppen-enthaltenden Carbonsäuren, Comonomergemischen von Sulfonsäuregruppen-enthaltenden Carbonsäuren mit Dicarbonsäuren und Comonomergemischen von Sulfonsäuregruppen-enthaltenden Carbonsäuren und/oder Dicarbonsäuren sowie deren Anhydride mit monoethylenischungesättigen Monocarbonsäuren mit 3 bis 10 C-Atomen.

2. Copolymerisate (A) nach Anspruch 1, dadurch gekennzeichnet, daß die zur Enolatbildung befähigten Mono- und/oder Disaccharide ausgewählt sind aus Glucose, Fructose, Mannose, Maltose, Xylose, Galactose, Palatinose und Leukrose.

3. Copolymerisate (A) nach Anspruch 1 oder 2, dadurch gekennzeichnet, daß die Sulfonsäuregruppen-enthaltenden Carbonsäure 2-Acrylamido-2-methyl-1-propansulfonsäure ist.

4. Copolymerisate (A) nach einem oder mehreren der Ansprüche 1 bis 3, dadurch gekennzeichnet, daß die Dicarbonsäuren ausgewählt sind aus Maleinsäure, Fumarsäure und/oder Itaconsäure sowie deren Anhydride.

5. Copolymerisate (A) nach einem oder mehreren der Ansprüche 1 bis 4, dadurch gekennzeichnet, daß die monoethylenisch-ungesättigten Monocarbonsäuren ausgewählt sind aus Acrylsäure und/oder Methacrylsäure.

6. Copolymerisate (A) nach einem oder mehreren der Ansprüche 1 bis 5, dadurch gekennzeichnet, daß das Stoffmengenverhältnis der Comonomerengemische von Sulfonsäuregruppen-enthaltenden Carbonsäuren und Dicarbonsäuren sowie deren Anhydride im Bereich von 95:5 bis 5:95 Mol-%, das Stoffmengenverhältnis von Sulfonsäuregruppen-enthaltenden Carbonsäuren zu monoethylenisch-ungesättigten Monocarbonsäuren mit 3 bis 10 C-Atomen im Bereich von 95:5 bis 5:95 Mol-%, das Stoffmengenverhältnis von Sulfonsäuregruppen-enthaltenden Carbonsäuren zu Dicarbonsäuren und monoethylenisch-ungesättigten Monocarbonsäuren im Bereich von 95:2,5:2,5 Mol-% bis 2,5:95:2,5 Mol-% oder bis 2,5:2,5:95 Mol-% oder das Stoffmengenverhältnis von Dicarbonsäuren zu monoethylenisch-ungesättigten Monocarbonsäuren mit 3 bis 10 C-Atomen im Bereich von 95:5 bis 5:95 Mol-% eingestellt ist.

7. Verfahren zur Herstellung von Copolymerisaten (A) nach einem oder mehreren der Ansprüche 1 bis 6, wobei man Lösungen zur Enolatbildung befähigter Mono- und/oder Disaccharide mit ungesättigten Carbonsäuren in Gegenwart radikalbildender Initiatoren, insbesondere organischen und/oder anorganischen Peroxiden sowie Wasserstoffperoxid umsetzt.

8. Verfahren nach Anspruch 7, dadurch gekennzeichnet, daß man die Umsetzung bei einer Temperatur von 60 bis 110°C, insbesondere bei einer Temperatur von 80 bis 100°C, insbesondere im Verlauf von 0,5 h bis 10 h, insbesondere im Verlauf von 2 h bis 4 h vornimmt.

9. Verfahren nach Anspruch 7 oder 8, dadurch gekennzeichnet, daß der pH-Wert der Umsetzung im Bereich von 5 bis 10, insbesondere 7 bis 10 eingestellt wird.

10. Abmischungen von Copolymerisaten (A) ungesättigter Carbonsäuren mit anderen ungesättigten Verbindungen, erhältlich durch Umsetzung von Lösungen zur Enolatbildung-befähigter Mono- und/oder Disaccharide mit ungesättigten Carbonsäuren in Gegenwart radikalbildender Initiatoren, wobei die ungesättigten Carbonsäuren ausgewählt sind aus Sulfonsäuregruppen-enthaltenen Carbonsäuren, Comonomergemischen von Sulfonsäuregruppen-enthaltenden Carbonsäuren mit Dicarbonsäuren und Comonomergemischen von Sulfonsäuregruppen-enthaltenden Carbonsäuren und/oder Dicarbonsäuren sowie deren Anhydride mit ethylenisch-ungesättigten Monocarbonsäuren mit 3 bis 10 C-Atomen mit Copolymerisaten (B) ungesättigter Carbonsäuren mit anderen ungesättigten Verbindungen, erhältlich durch Umsetzung von Lösungen zur Enolatbildung befähigter Monosaccharide mit ungesättigten Carbonsäuren, insbesondere mit 3 bis 10 C-Atomen, in Gegenwart von radikalbildenden Initiatoren.

11. Abmischungen nach Anspruch 10, dadurch gekennzeichnet, daß das Gewichtsverhältnis der Copolymerisate (A) zu den Copolymerisaten (B) im Bereich von 99:1 bis 1:99 Teilen, insbesondere im Bereich von 20 zu 80 bis 50 zu 50 liegt.

12. Abmischungen von Copolymerisaten dadurch gekennzeichnet, daß diese die Copolymerisate (A) und/oder Copolymerisate (B) und weiterhin anorganische und/oder organische, insbesondere biologisch abbaubare Substanzen, insbesondere Komplexbildner, Eiweiß, Eiweißhydrolysate, Magnesiumsalze und/oder Stabilisatoren für Perverbindungen enthalten.

13. Abmischung nach Anspruch 12, dadurch gekennzeichnet, daß die Substanzen ausgewählt sind aus feinkristallinen, synthetischen oder natürlichen, gebundenes Wasser enthaltenden Zeolithen, Alkalimetall- und/oder Ammoniumsalzen von Mono- und Polycarbonsäuren, insbesondere Gluconsäure, Nitrilotriessigsäure, Citronensäure und Weinsäure sowie Alkalimetall und/oder Ammoniumsalzen von Pyrophosphaten, Tripolyphosphaten und höher kondensierten Polyphosphate mit einem Gesamtphosphorgehalt der Endformulierung von weniger oder gleich 3 Gew.-%, insbesondere in einem Gewichtsverhältnis von 50:1, bis 1:1 Gew.-Teilen.

14. Abmischung nach Anspruch 12 oder 13, dadurch gekennzeichnet, daß die Stabilisatoren ausgewählt sind aus Phosphonsäuren, insbesondere Amino-tris-methylenphosphonsäure und deren N-Oxid, Ethylendiamin-tetra-kis-methylenphosphonsäure und deren N-Oxide, Diethylentriamin-pentakis-methylenphosphonsäure und deren N-Oxide, Triethylen-tetramin-hexakismethylenphosphonsäure und deren N-Oxide, 2-Phosphonobutan-1,2,4-tricarbonsäure, 1-Hydroxyethan-1,1-diphosphonsäure und/oder N-(2-Carboxyethyl)-1-amino-ethan-1,1-diphosphonsäure, insbesondere in einer Gewichtsverhältnis von Copolymerisat zu Phosphonsäure 30:1 bis 3:1 Gew.-Teilen.

15. Abmischungen nach einem oder mehreren der Ansprüche 12 bis 14, dadurch gekennzeichnet, daß die Magnesiumsalze ausgewählt sind aus Magnesiumoxid, Magnesiumhydroxid, Magnesiumsulfat und/oder Magnesiumchlorid, insbesondere in einer Gewichtsverhältnis von Copolymerisat zu Magnesiumsalz im Bereich von 30:1 bis 5:1 Gew.-Teilen.

16. Abmischungen nach einem oder mehreren der Ansprüche 12 bis 15, dadurch gekennzeichnet, daß als Eiweiß Casein und als Eiweißhydrolysat Kollagenhydrolysat ausgewählt ist, insbesondere in einem Gewichtsverhältnis von Copolymerisat zu Eiweiß und/oder Eiweißhydrolysat im Bereich von 100:1 bis 5:1, insbesondere 30:1 bis 1:1 Gew.-Teilen.

17. Verwendung der Copolymerisate (A) nach einem oder mehreren der Ansprüche 1 bis 6 oder der Abmischungen der Copolymerisate (A) und der Copolymerisate (B) nach einem oder mehreren der Ansprüche 10 bis 16 als Sequestrierungsmittel, Komplexbildner und der Cobuilder in Wasch- und Reinigungsmitteln.

18. Verwendung der Copolymerisate (A), der Abmischungen der Copolymerisate (A) und der Copolymerisate (B) und/oder der Copolymerisate (B) als Hilfsmittel in der Textilveredlung.

19. Verwendung nach Anspruch 17 beim alkalischen Abkochen von Baumwolle, bei sauren Entmineralisierungsprozessen, insbesondere mit anschließdender einbadiger Wasserstoffperoxidbleiche nach pH-Wert-Wechsel, bei der Peressigsäurebleiche, bei der Entschlichtung von Geweben, bei der wasserglashaltigen oder wasserglasfreien Wasserstoffperoxidbleiche, bei Färbeverfahren, insbesondere mit Reaktivfarbstoffen oder Indanthrenfarbstoffen, dem Nachwaschen von Färbungen und Druck sowie Waschprozessen in der Vorbehandlung und Färberei.

20. Verwendung nach Anspruch 18 oder 19 in der
wasserglashaltigen Kontinueheißbleiche zwischen 0,1 und 15 g/l, insbesondere zwischen 2 und 10 g/l,
wasserglasfreien Kontinueheißbleiche zwischen 0,1 und 15 g/l, insbesondere zwischen 2 und 10 g/l,
wasserglashaltigen Diskontinueheißbleiche zwischen 0,1 und 5 g/l, insbesondere zwischen 0,2 und 3 g/l,
wasserglasfreien Diskontinueheißbleiche zwischen 0,1 und 5 g/l, insbesondere zwischen 0,2 und 5 g/l,
wassserglashaltigen Kaltbleiche zwischen 0,1 und 15 g/l, insbesondere zwischen 2 und 10 g/l,
wasserglasfreien Kaltbleiche zwischen 0,1 und 15 g/l, insbesondere zwischen 2 und 10 g/l,
Kontinueentschlichtung zwischen 0,1 und 15 g/l, insbesondere zwischen 2 und 10 g/l,
Diskontinueentschlichtung zwischen 0,1 und 5 g/l, insbesondere zwischen 0,2 und 5 g/l,
reduktiven Bleiche zwischen 0,1 und 15 g/l, insbesondere zwischen 0,2 und 5 g/l,
beim alkalischen Abkochen zwischen 0,1 und 15 g/l, insbesondere zwischen 0,2 und 5 g/l,
beim Färbeverfahren zwischen 0,1 und 10 g/l, insbesondere zwischen 0,3 und 4 g/l,
beim Nachseifen von Färbungen zwischen 0,1 und 5 g/l, insbesondere zwischen 0,5 und 2 g/l und in
Waschprozessen 0,1 und 15 g/l, insbesondere zwischen 0,2 und 5 g/l, jeweils bezogen auf die Produktformulierungen, insbesondere mit einem Trockensubstanzgehalt von 15 bis 60 Gew.-%.

## Claims

1. Copolymers (A) of unsaturated carboxylic acids with other unsaturated compounds, obtainable by reaction of solutions of mono- and/or disaccharides capable of enolate formation with unsaturated carboxylic acids in the presence of free-radical initiators, characterized in that the unsaturated carboxylic acids are selected from the group consisting of sulpho-containing carboxylic acids, comonomer mixtures of sulpho-containing carboxylic acids with dicarboxylic acids and comonomer mixtures of sulpho-containing carboxylic acids and/or dicarboxylic acids and their anhydrides with monoethylenically unsaturated monocarboxylic acids having 3 to 10 carbon atoms.

2. Copolymers (A) according to Claim 1, characterized in that the mono- and/or disaccharides capable of enolate formation are selected from glucose, fructose, mannose, maltose, xylose, galactose, palatinose and leucrose.

3. Copolymers (A) according to Claim 1 or 2, characterized in that the sulpho-containing carboxylic acid is 2-acrylamido-2-methyl-1-propanesulphonic acid.

4. Copolymers (A) according to one or more of Claims 1 to 3, characterized in that the dicarboxylic acids are selected from maleic acid, fumaric and/or itaconic acid and anhydrides thereof.

5. Copolymers (A) according to one or more of Claims 1 to 4, characterized in that the monoethylenically unsaturated monocarboxylic acids are selected from acrylic acid and/or methacrylic acid.

6. Copolymers (A) according to one or more of Claims 1 to 5, characterized in that the mixing ratio of the comonomer mixtures of sulpho-containing carboxylic acids and dicarboxylic acids and their anhydrides is set within the range from 95:5 to 5:95 mol%, the mixing ratio of sulpho-containing carboxylic acids to monoethylenically unsaturated, monocarboxylic acids having 3 to 10 carbon atoms is set within the range from 95:5 to 5:95 mol%, the mixing ratio of sulpho-containing carboxylic acids to dicarboxylic acids and monoethylenically unsaturated monocarboxylic acids is set within the range from 95:2.5:2.5 mol% to 2.5:95:2.5 mol% or to 2.5:2.5:95 mol% or the mixing ratio of dicarboxylic acids to monoethylenically unsaturated monocarboxylic acids having 3 to 10 carbon atoms is set within the range from 95:5 to 5:95 mol%.

7. Process for preparing copolymers (A) according to one or more of Claims 1 to 6 by reacting solutions of mono- and/or disaccharides capable of enolate formation with unsaturated carboxylic acids in the presence of free-radical initiators, especially organic and/or inorganic peroxides and also hydrogen peroxide.

8. Process according to Claim 7, characterized in that the reaction is effected at a temperature of 60 to 110°C, especially at a temperature of 80 to 100°C, especially in the course of 0.5 h to 10 h, especially in the course of 2 h to 4 h.

9. Process according to Claim 7 or 8, characterized in that the pH of the reaction is set within the range from 5 to 10, especially 7 to 10.

10. Blends of copolymers (A) of unsaturated carboxylic acids with other unsaturated compounds, obtainable by reaction of solutions of mono- and/or disaccharides capable of enolate formation with unsaturated carboxylic acids in the presence of free-radical initiators, characterized in that the unsaturated carboxylic acids are selected from the group consisting of sulpho-containing carboxylic acids, comonomer mixtures of sulpho-containing carboxylic acids with dicarboxylic acids and comonomer mixtures of sulpho-containing carboxylic acids and/or dicarboxylic acids and their anhydrides with ethylenically unsaturated monocarboxylic acids having 3 to 10 carbon atoms, with copolymers (B) of unsaturated carboxylic acids with other unsaturated compounds, obtainable by reaction of solutions of monosaccharides capable of enolate formation with unsaturated carboxylic acids, especially having 3 to 10 carbon atoms, in the presence of free-radical initiators.

11. Blends according to Claim 10, characterized in that the weight ratio of the copolymers (A) to the copolymers (B) is within the range from 99:1 to 1:99 parts, especially within the range from 20:80 to 50:50.

12. Blends of copolymers, characterized in that they contain the copolymers (A) and/or copolymers (B) and additionally inorganic and/or organic, especially biodegradable, substances, especially complexing agents, protein, protein hydrolysates, magnesium salts and/or stabilizers for per-compounds.

13. Blend according to Claim 12, characterized in that the substances are selected from finely crystalline, synthetic or natural, zeolites containing bound water, alkali metal and/or ammonium salts of mono- and polycarboxylic acids, especially gluconic acid, nitrolotriacetic acid, citric acid and tartaric acid and also alkali metal and/or ammonium salts of pyrophosphates, tripolyphosphates and higher condensed polyphosphates having a total phosphorus content of the end formulation of less than or equal to 3 by weight, especially in a weight ratio of 50:1 to 1:1 parts by weight.

14. Blend according to Claim 12 or 13, characterized in that the stabilizers are selected from phosphonic acids, especially aminotrismethylenephosphonic acid and its N-oxide, ethylenediaminetetrakismethylenephosphonic acid and its N-oxides, diethylenetriaminepentakismethylenephosphonic acid and its N-oxides, triethylenetetraminehexakismethylenephosphonic acid and its N-oxides, 2-phosphonobutane-1,2,4-tricarboxylic acid, 1-hydroxyethane-1,1-diphosphonic acid and/or N-(2-carboxyethyl)-1-aminoethane-1,1-diphosphonic acid, especially in a weight ratio of copolymer to phosphonic acid 30:1 to 3:1 parts by weight.

15. Blends according to one or more of Claims 12 to 14, characterized in that the magnesium salts are selected from magnesium oxide, magnesium hydroxide, magnesium sulphate and/or magnesium chloride, especially in a weight ratio of copolymer to magnesium salt within the range from 30:1 to 5:1 parts by weight.

16. Blends according to one or more of Claims 12 to 15, characterized in that the protein is casein and the protein hydrolysate is collagen hydrolysate, especially in a weight ratio of copolymer to protein and/or protein hydrolysate within the range from 100:1 to 5:1, especially within the range from 30:1 to 1:1, parts by weight.

17. Use of the copolymers (A) according to one or more of Claims 1 to 6 or of the blends of the copolymers (A) and of the copolymers (B) according to one or more of Claims 10 to 16 as sequestrants, complexing agents and the cobuilder in laundry and cleaner detergent formulations.

18. Use of the copolymers (A), or of the blends of the copolymers (A) and of the copolymers (B) and/or of the copolymers (B) as auxiliaries in textile dyeing and finishing.

19. Use according to Claim 17 in the alkaline scour of cotton, in acidic demineralization processes, especially with subsequent one-bath hydrogen peroxide bleach after a pH change, in the peracetic acid bleach, in the desizing of wovens, in the waterglass-containing or waterglass-free hydrogen peroxide bleach, in dyeing processes, especially with reactive dyes or indanthrone dyes, the afterwashing of dyeings and prints and also washing processes in pretreatment and dyeing.

20. Use according to Claim 18 or 19 in the
waterglass-containing continuous hot bleach between 0.1 and 15 g/l, especially between 2 and 10 g/l,
waterglass-free continuous hot bleach between 0.1 and 15 g/l, especially between 2 and 10 g/l,
waterglass-containing batch hot bleach between 0.1 and 5 g/l, especially between 0.2 and 3 g/l,
waterglass-free batch hot bleach between 0.1 and 5 g/l, especially between 0.2 and 5 g/l,
waterglass-containing cold bleach between 0.1 and 15 g/l, especially between 2 and 10 g/l,
waterglass-free cold bleach between 0.1 and 15 g/l, especially between 2 and 10 g/l,
continuous desizing between 0.1 and 15 g/l, especially between 2 and 10 g/l,
batch desizing between 0.1 and 5 g/l, especially between 0.2 and 5 g/l,
reductive bleach between 0.1 and 15 g/l, especially between 0.2 and 5 g/l,
in alkaline scouring between 0.1 and 15 g/l, especially between 0.2 and 5 g/l,
in dyeing between 0.1 and 10 g/l, especially between 0.3 and 40 g/l,
in aftersoaping of dyeings between 0.1 and 5 g/l, especially between 0.5 and 2 g/l, and in
washing processes 0.1 and 15 g/l, especially between 0.2 and 5 g/l, each based on the product formulations, especially having a dry substance content of 15 to 60% by weight.

## Revendications

1. Copolymères (A) d'acides carboxyliques insaturés avec d'autres composés insaturés, pouvant être obtenus par la réaction de solutions de mono- et/ou disaccharides susceptibles de former des énolates, avec des acides carboxyliques insaturés en présence d'initiateurs radicalaires, caractérisés en ce que les acides carboxyliques insaturés sont choisis parmi les acides carboxyliques contenant des groupes acide sulfonique, des mélanges de comonomères d'acides carboxyliques contenant des groupes acide sulfonique avec des diacides carboxyliques et des mélanges de comonomères d'acides carboxyliques contenant des groupes acide sulfonique et/ou de diacides carboxyliques ainsi que leurs anhydrides avec des monoacides carboxyliques monoéthyléniquement insaturés, ayant 3 à 10 atomes C.

2. Copolymères (A) suivant la revendication 1, caractérisés en ce que les mono- et/ou disaccharides susceptibles de former des énolates sont choisis parmi le glucose, le fructose, le mannose, le maltose, le xylose, le galactose, le palatinose et le leucrose.

3. Copolymères (A) suivant la revendication 1 ou 2, caractérisés en ce que l'acide carboxylique contenant des groupes acide sulfonique est l'acide 2-acrylamido-2-méthyl-1-propanesulfonique.

4. Copolymères (A) suivant l'une ou plusieurs des revendications 1 à 3, caractérisés en ce que les diacides carboxyliques sont choisis parmi l'acide maléique, l'acide fumarique et/ou l'acide itaconique ainsi que leurs anhydrides.

5. Copolymères (A) suivant l'une ou plusieurs des revendications 1 à 4, caractérisés en ce que les monoacides carboxyliques monoéthyléniquement insaturés sont choisis parmi l'acide acrylique et/ou l'acide méthacrylique.

6. Copolymères (A) suivant l'une ou plusieurs des revendications 1 à 5, caractérisés en ce que le rapport des quantités de matière du mélange des comonomères d'acides carboxyliques contenant des groupes acide sulfonique et diacides carboxyliques ainsi que leurs anhydrides, est ajusté dans le domaine de 95:5 à 5:95% en moles, le rapport des quantités de matière des acides carboxyliques contenant des groupes acide sulfonique aux monoacides carboxyliques monoéthyléniquement insaturés ayant 3 à 10 atomes C dans le domaine de 95:5 à 5:95% en moles, le rapport des quantités de matière des acides carboxyliques contenant des groupes acide sulfonique aux diacides carboxyliques et monoacides carboxyliques monoéthyléniquement insaturés dans le domaine de 95:2,5:2,5% en moles à 2,5:95:2,5% en moles ou à 2,5 :2,5 :95% en moles, ou le rapport des quantités de matière des diacides carboxyliques aux monoacides carboxyliques monoéthyléniquement insaturés ayant 3 à 10 atomes C dans le domaine de 95 :5 à 5 :95% en moles.

7. Procédé de préparation des copolymères (A) suivant l'une ou plusieurs des revendications 1 à 6, où l'on fait réagir une solution de mono- et/ou disaccharides susceptibles de former des énolates avec des acides carboxyliques insaturés en présence d'initiateurs radicalaires, en particulier des peroxydes organiques et/ou inorganiques, ainsi que le peroxyde d'hydrogène.

8. Procédé suivant la revendication 7, caractérisé en ce que l'on effectue la réaction à une température de 60 à 110°C, en particulier à une température de 80 à 100°C, en l'espace de 0,5 à 10 heures, en particulier en l'espace de 2 à 4 heures.

9. Procédé suivant la revendication 7 ou 8, caractérisé en ce que l'on ajuste le pH de la réaction dans le domaine de 5 à 10, en particulier de 7 à 10.

10. Mélanges de copolymères (A) d'acides carboxyliques insaturés avec d'autres composés insaturés, pouvant être obtenus par réaction de solutions de mono- et/ou disaccharides susceptibles de former des énolates, avec des acides carboxyliques insaturés en présence d'initiateurs radicalaires, où les acides carboxyliques insaturés sont choisis parmi les acides carboxyliques contenant des groupes acide sulfonique, des mélanges de comonomères d'acides carboxyliques contenant des groupes acide sulfonique avec des diacides et des mélanges de comonomères d'acides carboxyliques contenant des groupes acide sulfonique et/ou de diacides carboxyliques ainsi que leurs anhydrides, avec des monoacides carboxyliques éthyléniquement insaturés ayant 3 à 10 atomes C, avec des copolymères (B) d'acides carboxyliques insaturés avec d'autres composés insaturés, pouvant être obtenus par réaction de solutions de monosaccharides susceptibles de former des énolates avec des acides carboxyliques insaturés, en particulier ayant 3 à 10 atomes C, en présence d'initiateurs radicalaires.

11. Mélanges suivant la revendication 10, caractérisés en ce que le rapport pondéral des copolymères (A) aux copolymères (B) se situe dans le domaine de 99:1 à 1:99 parties, en particulier dans le domaine de 20 à 80 jusqu'à 50 à 50.

12. Mélanges de copolymères caractérisés en ce que ceux-ci comprennent les copolymères (A) et/ou les copolymères (B) et de plus, des substances inorganiques et/ou organiques, en particulier biologiquement dégradables, en particulier un générateur de complexes, l'albumine, un hydrolysat d'albumine, des sels de magnésium et/ou des stabilisants pour composés peroxy.

13. Mélange suivant la revendication 12, caractérisé en ce que les substances sont choisies parmi les zéolites contenant de l'eau liée, finement cristallines, synthétiques ou naturelles, les sels de métal alcalin et/ou d'ammonium de mono- et polyacides carboxyliques, en particulier l'acide gluconique, l'acide nitrilotriacétique, l'acide citrique et l'acide tartrique droit, ainsi que les sels de métal alcalin et/ou d'ammonium de pyrophosphates, tripolyphosphates et polyphosphates condensés supérieurs avec une teneur en phosphore totale de la formulation finale de moins de ou égale à 3% en poids, en particulier dans un rapport pondéral de 50:1 à 1:1 parties en poids.

14. Mélange suivant la revendication 12 ou 13, caractérisé en ce que les stabilisants sont choisis parmi les acides phosphoniques, en particulier l'acide aminotris-méthylènephosphonique et ses N-oxydes, l'acide éthylènediaminetétrakis-méthylènephosphonique et ses N-oxydes, l'acide diéthylènetriaminepentakis-méthylène-phosphonique et ses N-oxydes, l'acide triéthylène-tétraminehexakis-méthylènephosphonique et ses N-oxydes, l'acide 2-phosphonobutane-1,2,4-tricarboxylique, l'acide 1-hydroxyéthane-1,1-diphosphonique et/ou l'acide N-(2-carboxyéthyl)-1-aminoéthane-1,1-diphosphonique, en particulier en un rapport pondéral du copolymère à l'acide phosphonique de 30:1 à 3:1 parties en poids.

15. Mélanges suivant l'une ou plusieurs des revendications 12 à 14, caractérisés en ce que les sels de magnésium sont choisis parmi l'oxyde de magnésium, l'hydroxyde de magnésium, le sulfate de magnésium et/ou le chlorure de magnésium, en particulier en un rapport pondéral du copolymère au sel de magnésium dans le domaine de 30:1 à 5:1 parties en poids.

16. Mélanges suivant l'une ou plusieurs des revendications 12 à 15, caractérisés en ce que l'on choisit la caséine comme albumine et l'hydrolysat de collagène comme hydrolysat d'albumine, en particulier en un rapport pondéral du copolymère à l'albumine et/ou à l'hydrolysat d'albumine dans le domaine de 100:1 à 5:1, en particulier de 30:1 à 1:1 parties en poids.

17. Utilisation des copolymères (A) suivant l'une ou plusieurs des revendications 1 à 6 ou des mélanges de copolymères (A) et copolymères (B) suivant l'une ou plusieurs des revendications 10 à 16, comme agent séquestrant, générateur de complexe et coadjuvant actif dans les agents de lavage et de nettoyage.

18. Utilisation des copolymères (A), des mélanges de copolymères (A) et copolymères (B) et/ou des copolymères (B) comme auxiliaire dans l'amélioration des textiles.

19. Utilisation suivant la revendication 17 lors de l'ébullition alcaline du coton, lors des procédés de déminéralisation acide, en particulier avec une décoloration au peroxyde d'hydrogène à un bain, ultérieure, après modification de pH, lors de la décoloration à l'acide peracétique, lors de l'apprêt des tissus, lors de la décoloration par peroxyde d'hydrogène avec au sans orthosilicate, lors des procédés de teinture, en particulier avec des colorants réactifs, ou des colorants à l'indanthrène, le relavage des teintures et l'impression ainsi que les processus de lavage dans le traitement ultérieur et la teinture.

20. Utilisation suivant la revendication 18 ou 19, dans la décoloration à chaud, en continu avec orthosilicate, entre 0,1 et 15 g/litre, en particulier entre 2 et 10 g/litre,
dans la décoloration à chaud, en continu sans orthosilicate, entre 0,1 et 15 g/litre, en particulier entre 2 et 10 g/litre,
dans la décoloration à chaud, de manière discontinue avec orthosilicate, entre 0,1 et 5 g/litre, en particulier entre 0,2 et 3 g/litre,
dans la décoloration à chaud, de manière discontinue sans orthosilicate, entre 0,1 et 5 g/litre, en particulier entre 0,2 et 5 g/litre,
dans la décoloration à froid avec orthosilicate, entre 0,1 et 15 g/litre, en particulier entre 2 et 10 g/litre,
dans la décoloration à froid sans orthosilicate, entre 0,1 et 15 g/litre, en particulier entre 2 et 10 g/litre,
dans l'apprêt en continu, entre 0,1 et 15 g/litre, en particulier entre 2 et 10 g/litre,
dans l'apprêt de manière discontinue, entre 0,1 et 5 g/litre, en particulier entre 0,2 et 5 g/litre,
dans la décoloration réductrice, entre 0,1 et 15 g/litre, en particulier entre 0,2 et 5 g/litre,
dans l'ébullition alcaline, entre 0,1 et 15 g/litre, en particulier entre 0,2 et 5 g/litre,
dans le procédé de teinture, entre 0,1 et 10 g/litre, en particulier entre 0,3 et 4 g/litre,
dans la saponification ultérieure des teintures, entre 0,1 et 5 g/litre, en particulier entre 0,5 et 2 g/litre, et
dans les processus de lavage, entre 0,1 et 15 g/litre, en particulier entre 0,2 et 5 g/litre, chaque fois sur base de la formulation de produits, en particulier avec une teneur en matière sèche de 15 à 60% en poids.
